# EUROPEAN PATENT APPLICATION

(11) **EP 4 224 356 A1**
(43) Date of publication of application: **09.08.2023**
(21) Application number: 20956256.0
(22) Date of filing: 30.09.2020
(51) Int. Cl.: G06F 30/398

(54) **EQUIVALENT CIRCUIT ANALYSIS PROGRAM, EQUIVALENT CIRCUIT ANALYSIS DEVICE, AND EQUIVALENT CIRCUIT ANALYSIS METHOD**

(71) Applicant: Fujitsu Limited, Kawasaki-shi, Kanagawa 211-8588 (JP)
(72) Inventor: YAMAZAKI, Takashi, Kawasaki-shi, Kanagawa 211-8588 (JP); YAMADA, Hiroaki, Kawasaki-shi, Kanagawa 211-8588 (JP); YAMANE, Shohei, Kawasaki-shi, Kanagawa 211-8588 (JP); KOCHIBE, Yoichi, Kawasaki-shi, Kanagawa 211-8588 (JP); OHARA, Toshiyasu, Kawasaki-shi, Kanagawa 211-8588 (JP)
(74) Representative: Hoffmann Eitle
(86) International application number: PCT/JP2020/037205
(87) International publication number: WO 2022/070328

(57) **Abstract**

A surface pattern included in first circuit information is specified, second circuit information in which the surface pattern is changed to a line pattern is generated based on a wire of a layer adjacent to the surface pattern, and an equivalent circuit analysis is executed based on the second circuit information.

## Description

### FIELD

The present invention relates to an equivalent circuit analysis technology.

### BACKGROUND

Electronic noise (electromagnetic interference (EMI) emitted when a current flows through an electronic circuit board has a regulation value set for each frequency. Thus, for example, in a case where a product on which the electronic circuit board is mounted is developed, or the like, a developer estimates the EMI emitted from the electronic circuit board by performing an electromagnetic field analysis. Specifically, the developer estimates the EMI emitted from the electronic circuit board by the electromagnetic field analysis using, for example, a finite difference time domain method (FDTD method).

On the other hand, for example, a technology has been developed in which equivalent circuit formation is performed by expressing a circuit included in the electronic circuit board by a simple network or a circuit element, and further, a machine learning model that estimates the EMI is constructed by using a model generated by performing the equivalent circuit formation. Specifically, for example, the developer performs an equivalent circuit analysis, which is a type of the electromagnetic field analysis (hereinafter also simply referred to as an equivalent circuit analysis), on the model generated by performing the equivalent circuit formation, so as to specify a current distribution in a circuit included in an equivalent circuit board. Then, for example, the developer estimates the EMI using the trained machine learning model by using the specified current distribution as a feature. With this configuration, the developer may estimate the EMI emitted from the electronic circuit board with a smaller amount of calculation than in the case of performing the electromagnetic field analysis by the finite difference time domain method.

### CITATION LIST

### [PATENT DOCUMENT]

Patent Document 1: Japanese Laid-open Patent Publication No. 2008-015636
Patent Document 2: Japanese Laid-open Patent Publication No. 2010-097475

### SUMMARY

### [TECHNICAL PROBLEM]

The circuit included in the electronic circuit board as described above may include a layer having a planar spreading pattern (hereinafter also referred to as a surface pattern) such as a GND layer or a power supply layer. Then, in a case where equivalent circuit formation is performed on such a surface pattern, the developer performs, for example, discretization of the surface pattern in advance by dividing the surface pattern into grid-like meshes.

Here, in the surface pattern as described above, a current induced by a current generated in lines in upper and lower layers is generated along the lines in the upper and lower layers. Thus, in a case where the discretization of the surface pattern is performed, the developer needs to perform the meshing of the surface pattern so that the lines in the upper and lower layers and the grids overlap.

However, for example, in a case where the meshing of the surface pattern is performed automatically, the developer needs to reduce a size of the grids that constitute the mesh because of necessity of overlapping the lines in the upper and lower layers and the grids. Thus, as the number of grids increases, the size in question increases, which may increase an amount of calculation for performing the equivalent circuit analysis.

Therefore, in one aspect, an object of the present invention is to provide an equivalent circuit analysis program, an equivalent circuit analysis apparatus, and an equivalent circuit analysis method that make it possible to suppress an amount of calculation associated with an equivalent circuit analysis for a circuit having a surface pattern.

### [SOLUTION TO PROBLEM]

In one aspect of an embodiment, a computer is caused to execute processing of specifying a surface pattern included in first circuit information, generating second circuit information in which the surface pattern is changed to a line pattern based on a wire of a layer adjacent to the surface pattern, and executing an equivalent circuit analysis based on the second circuit information.

According to an aspect of the embodiments, an equivalent circuit analysis program that causes a computer to execute a process, the process includes specifying a surface pattern included in first circuit information; generating second circuit information in which the surface pattern is changed to a line pattern based on a wire of a layer adjacent to the surface pattern; and executing an equivalent circuit analysis based on the second circuit information.

### [ADVANTAGEOUS EFFECTS OF INVENTION]

According to one aspect, it is possible to suppress an amount of calculation associated with an equivalent circuit analysis for a circuit having a surface pattern.

### BRIEF DESCRIPTION OF DRAWINGS

FIG. 1 is a diagram illustrating a configuration of an information processing system 10;
FIG. 2A and FIG. 2B are diagrams illustrating a specific example of a current generated in a surface pattern;
FIG. 3A and FIG. 3B are diagrams illustrating a specific example of a current generated in the surface pattern;
FIG. 4A and FIG. 4B are diagrams illustrating a specific example of discretization of the surface pattern;
FIG. 5 is a diagram illustrating a hardware configuration of an information processing device 1;
FIG. 6 is a block diagram of functions of the information processing device 1;
FIG. 7 is a flowchart diagram illustrating an outline of equivalent circuit analysis processing in a first embodiment;
FIG. 8 is a flowchart diagram illustrating details of the equivalent circuit analysis processing in the first embodiment;
FIG. 9 is a flowchart diagram illustrating the details of the equivalent circuit analysis processing in the first embodiment;
FIG. 10 is a flowchart diagram illustrating the details of the equivalent circuit analysis processing in the first embodiment;
FIG. 11 is a flowchart diagram illustrating the details of the equivalent circuit analysis processing in the first embodiment;
FIG. 12A, FIG. 12B, and FIG. 12C are diagrams illustrating a specific example of circuit information 131;
FIG. 13A, FIG. 13B, and FIG. 13C are diagrams illustrating the details of the equivalent circuit analysis processing in the first embodiment;
FIG. 14 is a diagram illustrating a specific example of line pattern information 132;
FIG. 15 is a diagram illustrating the details of the equivalent circuit analysis processing in the first embodiment;
FIG. 16 is a diagram illustrating a specific example of the line pattern information 132;
FIG. 17 is a diagram illustrating the details of the equivalent circuit analysis processing in the first embodiment;
FIG. 18 is a diagram illustrating a specific example of the line pattern information 132;
FIG. 19 is a diagram illustrating the details of the equivalent circuit analysis processing in the first embodiment; and
FIG. 20 is a diagram illustrating the details of the equivalent circuit analysis processing in the first embodiment.

### DESCRIPTION OF EMBODIMENTS

### [Configuration of Information Processing System]

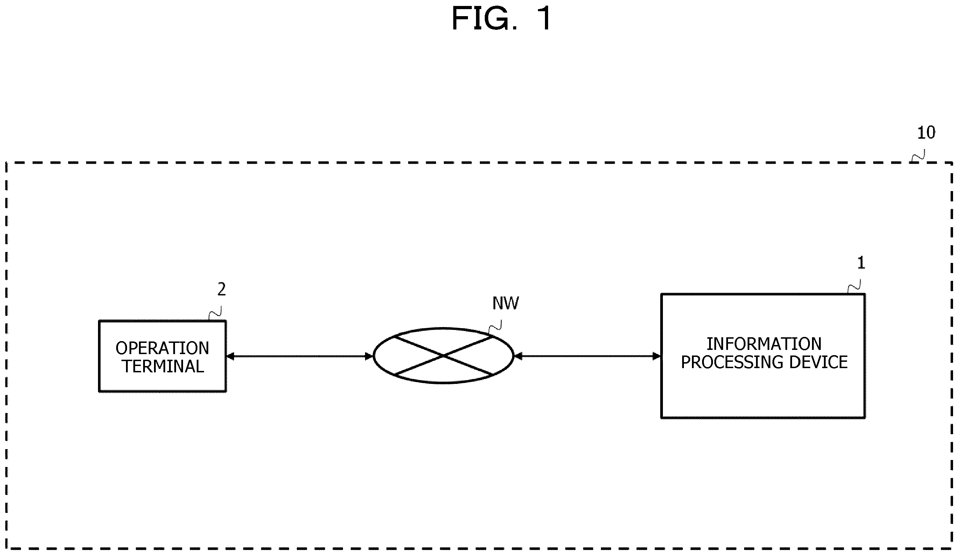

First, a configuration of an information processing system 10 will be described. FIG. 1 is a diagram illustrating the configuration of the information processing system 10.

The information processing system 10 illustrated in FIG. 1 includes an information processing device 1 and an operation terminal 2.

The operation terminal 2 is a terminal that may access the information processing device 1 via a network NW, and may be, for example, a personal computer (PC) or the like for a developer to perform input of necessary information, and the like.

The information processing device 1 is, for example, one or more physical machines. Specifically, the information processing device 1 performs equivalent circuit formation on a circuit included in an electronic circuit board (not illustrated) to be analyzed. Then, the information processing device 1 performs an equivalent circuit analysis on the circuit obtained by performing the equivalent circuit formation.

Here, the circuit included in the electronic circuit board as described above may include a layer having a surface pattern at least partially. Then, in such a surface pattern, for example, a current induced by a current generated in lines (hereinafter also referred to as wires) in upper and lower layers is generated by lines (projection) in upper and lower images.

### [Specific Example of Current Generated in Surface Pattern]

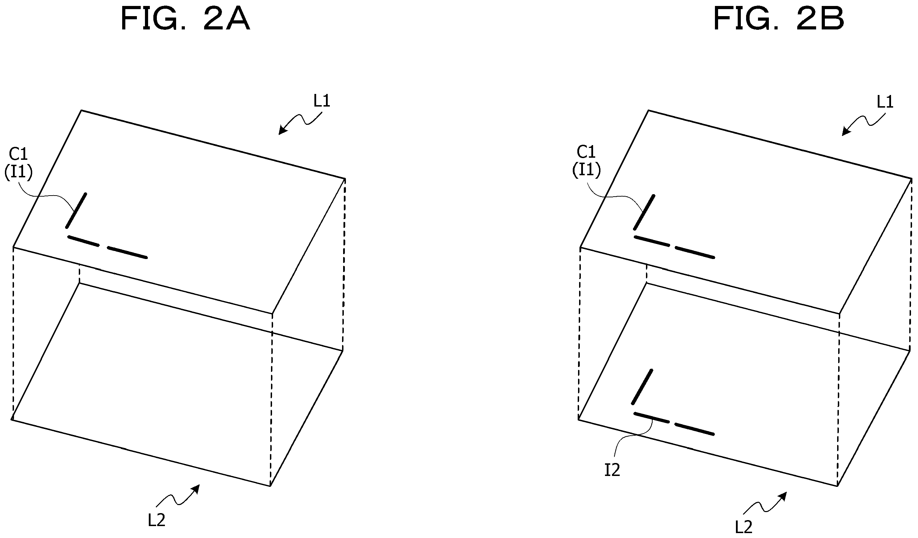

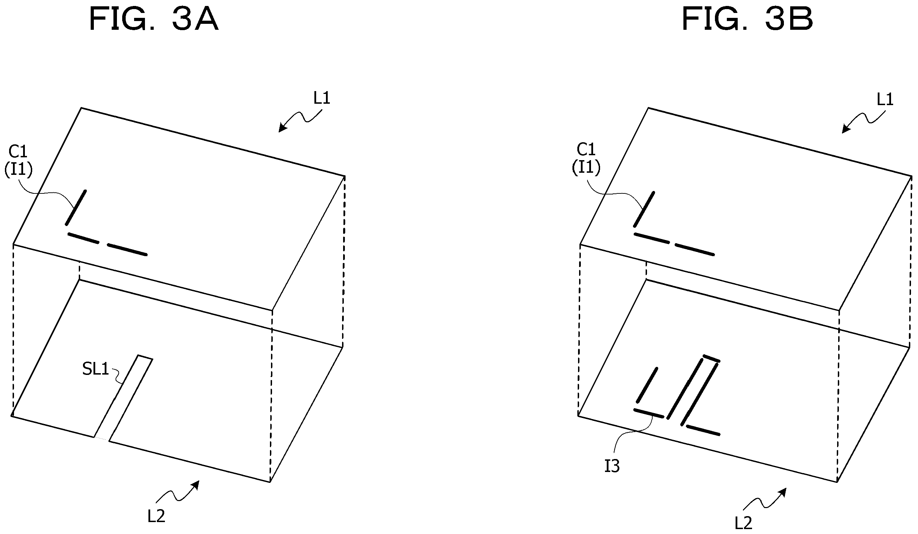

FIGs. 2 and 3 are diagrams illustrating specific examples of the current generated in the surface pattern. Hereinafter, a relationship between a layer L1 having a pattern for a line (hereinafter also referred to as a line pattern) and a layer L2 having a surface pattern (a layer below the layer L1) will be described.

Specifically, in a case where a current I1 is generated in a line C1 arranged in the layer L1 as illustrated in FIG. 2A, a current I2 induced by the current I1 is generated along the line C1 in the layer L2 as illustrated in FIG. 2B.

Furthermore, in this case, in a case where a slit SL1 exists in the layer L2 as illustrated in FIG. 3A, in the layer L2, a current I3 is generated along the slit SL1 at a position where the slit SL1 exists and along the line C1 arranged in the layer L1 at a position where the slit SL1 does not exist, as illustrated in FIG. 3B.

Then, for example, in a case where equivalent circuit formation is performed on the surface pattern arranged on the layer L2, the information processing device 1 performs, for example, discretization of the surface pattern in advance by dividing the surface pattern into grid-like meshes. Specifically, in this case, the information processing device 1 constitutes the meshes so that the grids follow the lines in the upper and lower layers because of necessity of modelling an influence received from the currents in the lines existing in the upper and lower layers.

### [Specific Example of Discretization of Surface Pattern]

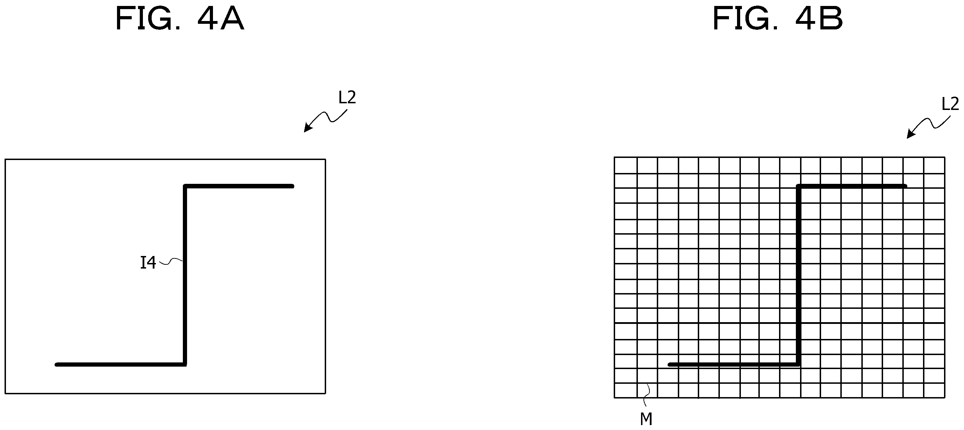

FIG. 4A and FIG. 4B are diagrams illustrating a specific example of the discretization of the surface pattern.

For example, in a case where a current generated in the layer L2 is a current I4 as illustrated in FIG. 4A, the developer generates a mesh M in which grids overlap with a path through which the current I4 flows, as illustrated in FIG. 4B. Specifically, for example, the developer generates the mesh M so that intervals between the grids are equal as illustrated in FIG. 4B.

However, in a case where the meshing of the surface pattern as described above is performed automatically, the developer needs to reduce a size of the grids that constitute the mesh because of the necessity of overlapping the lines in the upper and lower layers and the grids. Thus, as the number of grids increases, the size in question increases, which may increase an amount of calculation for performing the equivalent circuit analysis.

On the other hand, the developer may reduce the size in question by using, for example, a mesh having grids with uneven intervals. However, in this case, a large amount of manual work is needed to perform the discretization of the surface pattern, making it impossible to efficiently perform the discretization of the surface pattern.

Therefore, the information processing device 1 in the present embodiment refers to circuit information (hereinafter also referred to as first circuit information) regarding a circuit included in an electronic circuit board to be analyzed (not illustrated) to specify a surface pattern included in the electronic circuit board to be analyzed. Then, the information processing device 1 generates line pattern information (hereinafter also referred to as second circuit information) in which information regarding the specified surface pattern is changed to information regarding a line pattern among information included in the circuit information, based on a line in a layer adjacent to the surface pattern (for example, upper and lower layers of the surface pattern). Thereafter, the information processing device 1 executes an equivalent circuit analysis based on the generated line pattern information.

In other words, it may be determined that the surface pattern has a limited number of portions where a strong current is generated. Specifically, in the surface pattern, for example, a strong current is generated at a position facing the lines in the upper and lower layers of the surface pattern. Thus, the information processing device 1 in the present embodiment performs discretization only on a portion where it may be determined that a strong current is generated, instead of discretization on the entire surface pattern.

With this configuration, the information processing device 1 in the present embodiment may suppress an amount of calculation associated with equivalent circuit formation for the surface pattern. Thus, the information processing device 1 may suppress an amount of calculation needed to perform the equivalent circuit analysis for the surface pattern.

### [Hardware Configuration of Information Processing System]

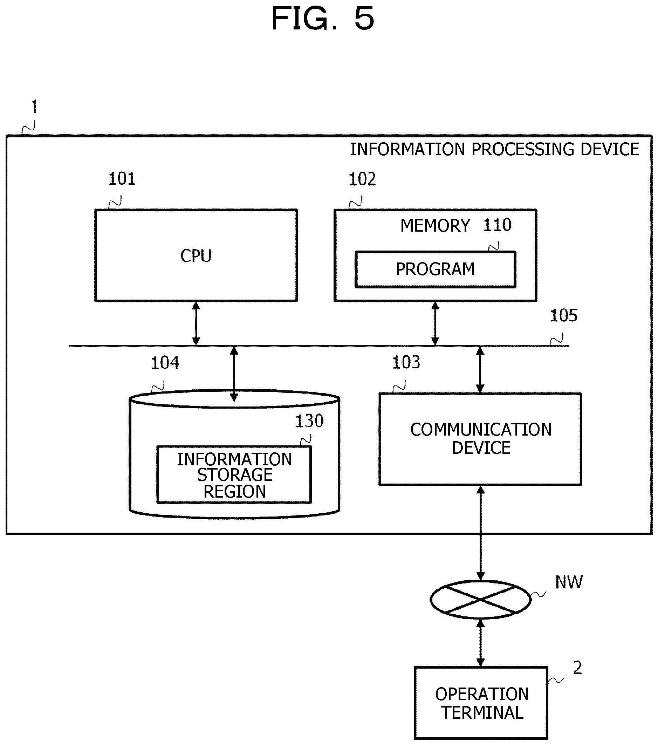

FIG. 5 is a diagram illustrating a hardware configuration of the information processing device 1.

As illustrated in FIG. 5, the information processing device 1 includes a CPU 101 as a processor, a memory 102, a communication device 103, and a storage medium 104. The respective units are coupled with one another via a bus 105.

The storage medium 104 includes, for example, a program storage region (not illustrated) that stores a program 110 for performing processing of performing an equivalent circuit analysis for a surface pattern (hereinafter also referred to as equivalent circuit analysis processing). Furthermore, the storage medium 104 includes, for example, an information storage region 130 that stores information used when the equivalent circuit analysis processing is performed. Note that the storage medium 104 may be, for example, a hard disk drive (HDD) or a solid state drive (SSD).

The CPU 101 executes the program 110 loaded from the storage medium 104 into the memory 102, and performs the equivalent circuit analysis processing.

Furthermore, for example, the communication device 103 communicates with the operation terminal 2 via the network NW.

### [Functions of Information Processing System]

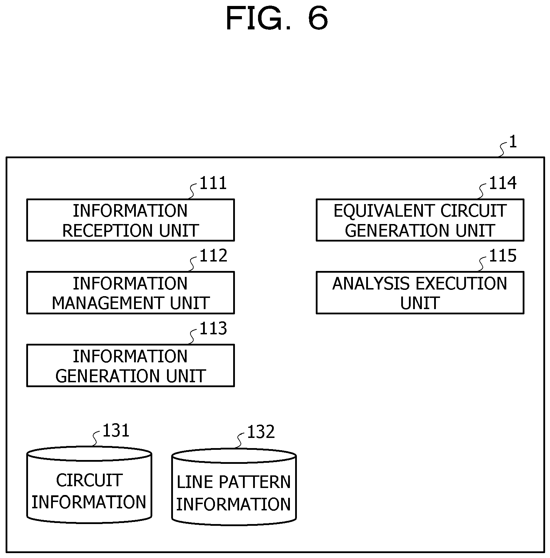

FIG. 6 is a block diagram of functions of the information processing device 1.

As illustrated in FIG. 6, for example, the information processing device 1 implements various functions including an information reception unit 111, an information management unit 112, an information generation unit 113, an equivalent circuit generation unit 114, and an analysis execution unit 115 through organic collaboration between hardware such as the CPU 101 and the memory 102 and the program 110.

Furthermore, as illustrated in FIG. 6, for example, the information processing device 1 stores circuit information 131 and line pattern information 132 in the information storage region 130.

The information reception unit 111 receives, for example, the circuit information 131 transmitted by the developer via the operation terminal 2. Then, the information management unit 112 stores, for example, the circuit information 131 received by the information reception unit 111 in the information storage region 130.

The information generation unit 113 refers to the circuit information 131 stored in the information storage region 130 to specify a surface pattern included in an electronic circuit board to be analyzed. Then, the information generation unit 113 generates the line pattern information 132 in which information regarding the specified surface pattern is changed to information regarding a line pattern among information included in the circuit information 131 stored in the information storage region 130, based on a line in a layer adjacent to the specified surface pattern. Then, for example, the information management unit 112 stores the line pattern information 132 generated by the information generation unit 113 in the information storage region 130.

The equivalent circuit generation unit 114 refers to, for example, the line pattern information 132 stored in the information storage region 130 to perform discretization on the surface pattern specified by the information generation unit 113. Then, the equivalent circuit generation unit 114 performs equivalent circuit formation on the surface pattern on which the discretization has been performed. Note that the equivalent circuit generation unit 114 performs equivalent circuit formation also on another circuit (circuit other than the surface pattern) included in the electronic circuit board.

The analysis execution unit 115 performs an equivalent circuit analysis included in the electronic circuit board to be analyzed by using an equivalent circuit obtained by performing the equivalent circuit formation by the equivalent circuit generation unit 114.

### [Outline of First Embodiment]

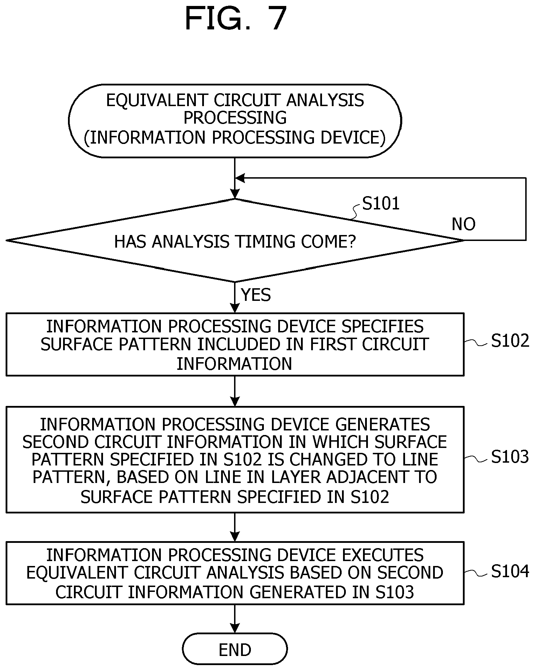

FIG. 7 is a flowchart diagram illustrating an outline of the equivalent circuit analysis processing in a first embodiment.

As illustrated in FIG. 7, the information processing device 1 stands by until analysis timing comes (NO in S101). The analysis timing may be, for example, timing when the developer inputs information indicating that an equivalent circuit analysis is started via the operation terminal 2.

Then, in a case where the analysis timing has come (YES in S101), the information processing device 1 specifies a surface pattern included in the circuit information 131 (S102).

Subsequently, the information processing device 1 generates the line pattern information 132 in which the surface pattern specified in the processing of S102 is changed to a line pattern, based on a line in a layer adjacent to the surface pattern specified in the processing of S102 (S103).

Thereafter, the information processing device 1 executes the equivalent circuit analysis based on the line pattern information 132 generated in the processing of S103 (S104).

With this configuration, the information processing device 1 in the present embodiment may suppress an amount of calculation associated with equivalent circuit formation for the surface pattern. Thus, the information processing device 1 may suppress an amount of calculation needed to perform the equivalent circuit analysis for the surface pattern.

### [Details of First Embodiment]

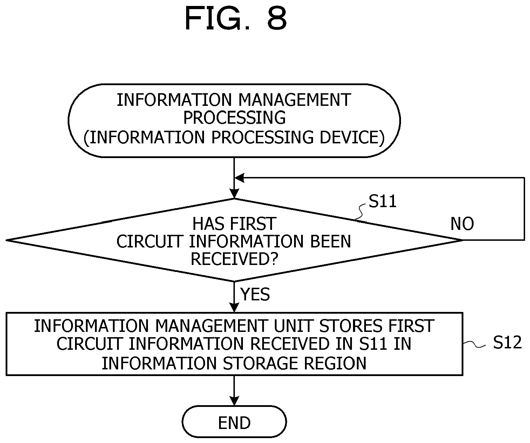

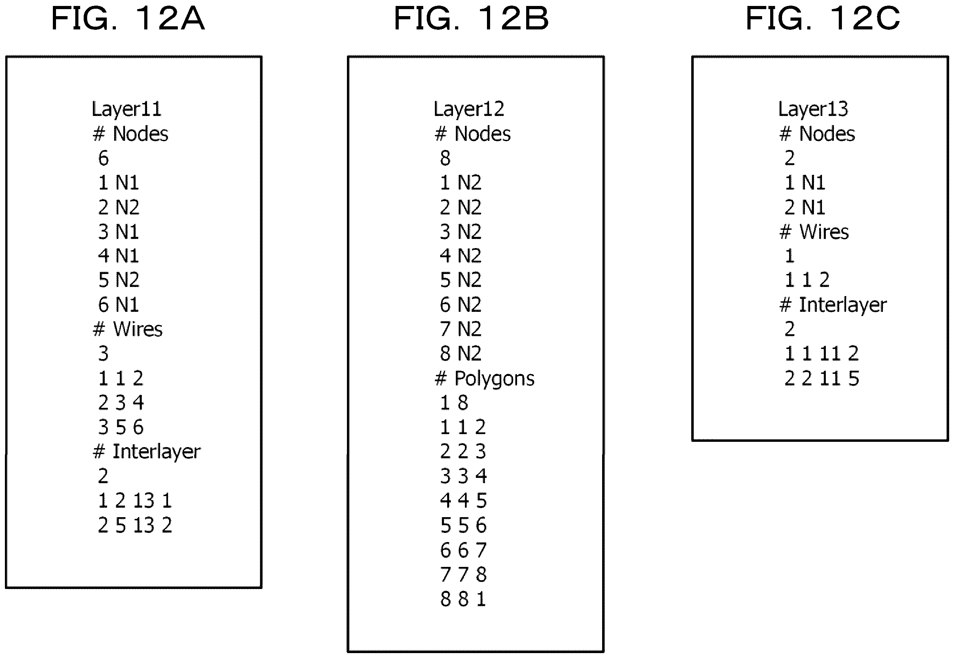

FIGs. 8 to 11 are flowchart diagrams illustrating details of the equivalent circuit analysis processing in the first embodiment. Furthermore, FIGs. 12 to 20 are diagrams illustrating the details of the equivalent circuit analysis processing in the first embodiment.

### [Information Management Processing]

First, processing of managing information of the circuit information 131 (hereinafter also referred to as information management processing) in the equivalent circuit analysis processing will be described. FIG. 8 is a flowchart diagram for describing the information management processing.

As illustrated in FIG. 8, the information reception unit 111 of the information processing device 1 stands by until receiving the circuit information 131 (NO in S11). Specifically, the information reception unit 111 stands by until receiving, for example, the circuit information 131 input by the developer via the operation terminal 2.

Then, the information management unit 112 of the information processing device 1 stores the circuit information 131 received in the processing of S11 in the information storage region 130 (S12).

### [Specific Example of Circuit Information]

FIG. 12A, FIG. 12B, and FIG. 12C are diagrams illustrating a specific example of the circuit information 131. Specifically, FIG. 12A is the circuit information 131 regarding a layer L11 (hereinafter also referred to as circuit information 131a), FIG. 12B is the circuit information 131 regarding a layer L12, which is a layer below the layer L11 (hereinafter also referred to as circuit information 131b), and FIG. 12C is the circuit information 131 regarding a layer L13, which is a layer below the layer L12 (hereinafter referred to as circuit information 131c).

In FIG. 12A, "#Nodes" is set with information regarding nodes included in the layer L11, "#Wires" is set with information regarding lines included in the layer L11, and "#Interlayer" is set with information regarding another layer coupled to the layer L11.

Specifically, "#Nodes" in FIG. 12A is set with "6" indicating that six nodes are included in the layer L11, °1 N1" indicating that a first node has one arm, "2 N2" indicating that a second node has two arms, and °3 N1" indicating that a third node has one arm. Furthermore, "#Nodes" in FIG. 12A is set with "4 N1" indicating that a fourth node has one arm, "5 N2" indicating that a fifth node has two arms, and "6 N1" indicating that a sixth node has one arm.

Furthermore, "#Wires" in FIG. 12A is set with "3" indicating that three lines are included in the layer L11, "1 1 2" indicating that a first line couples the first node and the second node, "2 3 4" indicating that a second line couples the third node and the fourth node, and "3 5 6" indicating that a third line couples the fifth node and the sixth node.

Moreover, "#Interlayer" in FIG. 12A is set with "2" indicating that there are two paths coupling the layer L11 and another layer, °1 2 13 1" indicating that a first path couples the second node in the layer L11 and a first node in the layer L13, and "2 5 13 2" indicating that a second path couples the fifth node in the layer L11 and a second node in the layer L13.

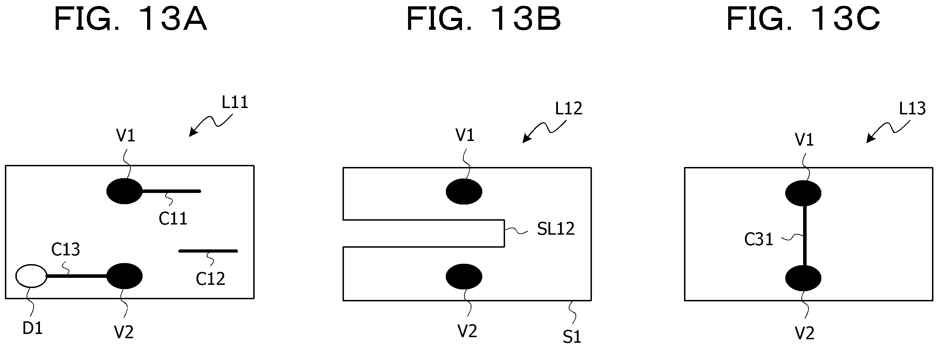

In other words, as illustrated in FIG. 13A, the circuit information 131a illustrated in FIG. 12A indicates that each of a line C11 as the first line, a line C12 as the second line, and a line C13 as the third line is arranged in the layer L11. Note that, in the layer L11 illustrated in FIG. 13A, a via V1, a via V2, and a point D1 coupled to a power supply (not illustrated) are further arranged.

Furthermore, in FIG. 12B, "#Nodes" is set with information regarding nodes included in the layer L12, and "#Polygons" is set with information regarding surface patterns (polygons) included in the layer L12.

Specifically, "#Nodes" in FIG. 12B is set with, for example, "8" indicating that eight nodes are included in the layer L12, °1 N2" indicating that a first node has two arms, "2 N2" indicating that a second node has two arms, and "3 N2" indicating that a third node has two arms. Moreover, "#Polygons" in FIG. 12B is set with, for example, °1 8" indicating that eight nodes are included in a first surface pattern, "1 1 2" indicating that a first edge in the surface pattern couples the first node and the second node, "2 2 3" indicating that a second edge couples the second node and the third node, and "3 3 4" indicating that a third edge couples the third node and a fourth node.

In other words, the circuit information 131b illustrated in FIG. 12B indicates that a surface pattern S1 is arranged on the layer L12 as illustrated in FIG. 13B. Note that, in the layer L12 illustrated in FIG. 13B, a via V1 and a via V2 are further arranged. Furthermore, a slit SL12 exists in the layer L12 illustrated in FIG. 13B.

In FIG. 12C, "#Nodes" is set with information regarding nodes included in the layer L13, "#Wires" is set with information regarding lines included in the layer L13, and "#Interlayer" is set with information regarding another layer coupled to the layer L13.

Specifically, "#Nodes" in FIG. 12C is set with "2" indicating that two nodes are included in the layer L13, °1 N1" indicating that the first node has one arm, and "2 N1" indicating that the second node has one arm.

Furthermore, "#Wires" in FIG. 12C is set with "1" indicating that one line is included in the layer L13 and "1 1 2" indicating that a first line couples the first node and the second node.

Moreover, "#Interlayer" in FIG. 12C is set with "2" indicating that there are two paths coupling the layer L13 and another layer, "1 1 11 2" indicating that a first path couples the first node in the layer L13 and the second node in the layer L11, and °2 2 11 5" indicating that a second path couples the second node in the layer L13 and the fifth node in the layer L11.

In other words, the circuit information 131c illustrated in FIG. 12C indicates that a line C31 is arranged in the layer L13 as illustrated in FIG. 13C. Note that, in the layer L13 illustrated in FIG. 13C, a via V1 and a via V2 are further arranged.

### [Main Processing of Equivalent Circuit Analysis Processing]

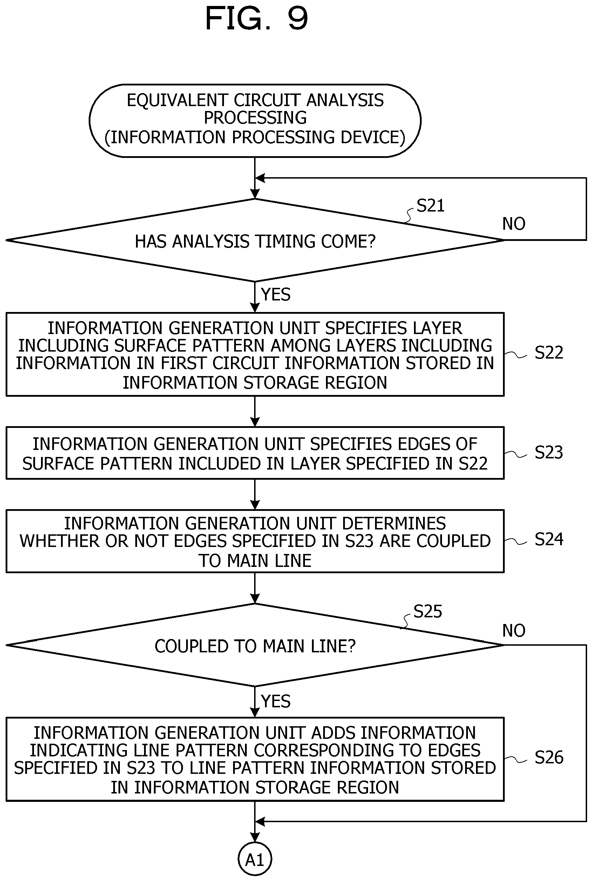

FIGs. 9 to 11 are flowchart diagrams for describing main processing of the equivalent circuit analysis processing.

As illustrated in FIG. 9, the information generation unit 113 of the information processing device 1 stands by until analysis timing comes (NO in S21). The analysis timing may be, for example, timing when the developer inputs information indicating that an equivalent circuit analysis is started via the operation terminal 2.

Then, in a case where the analysis timing has come (YES in S21), the information generation unit 113 specifies a layer including a surface pattern among layers including information in the circuit information 131 stored in the information storage region 130 (S22).

Specifically, for example, the information generation unit 113 refers to the circuit information 131 described with reference to FIG. 12A, FIG. 12B, and FIG. 12C to specify the layer L12 on which the surface pattern S1 is arranged.

Subsequently, the information generation unit 113 specifies edges of the surface pattern included in the layer specified in the processing of S22 (S23).

Specifically, for example, the information generation unit 113 refers to the circuit information 131b described with reference to FIG. 12B to specify each of first to eighth edges corresponding to the surface pattern S1 arranged on the layer L12.

Thereafter, the information generation unit 113 determines whether or not the edges specified in the processing of S23 are coupled to a main line (S24). The main line is, for example, a line coupled to the power supply (not illustrated).

Specifically, in the example illustrated in FIG. FIG. 13A, FIG. 13B, and FIG. 13C, the line C13 is coupled to the point D1 coupled to the power supply (not illustrated). Furthermore, the line C13 is coupled to the line C11 via the via V2, the line C31, and the via V1. Thus, in the example illustrated in FIG. 13A, FIG. 13B, and FIG. 13C, the line C13, the line C31, and the line C11 correspond to the main line (lines coupled to the main line). Then, in the example illustrated in FIG. 13A, FIG. 13B, and FIG. 13C, for example, the line C13 is coupled to the surface pattern S1 via the via V2. Thus, the information generation unit 113 determines that the edges of the surface pattern S1 are coupled to the main line.

Subsequently, in a case where it is determined that the edges specified in the processing of S23 are coupled to the main line (YES in S25), the information generation unit 113 adds information indicating a line pattern corresponding to the edges specified in the processing of S23 to the line pattern information 132 stored in the information storage region 130 (S26).

On the other hand, in a case where it is determined that the edges specified in the processing of S23 are not coupled to the main line (NO in S25), the information generation unit 113 does not perform the processing of S26.

### [Specific Examples of Line Pattern Information]

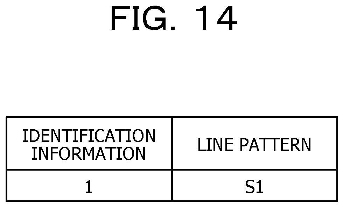

FIGs. 14, 16, and 18 are diagrams illustrating specific examples of the line pattern information 132. Specifically, FIG. 14 is a diagram illustrating a specific example of the line pattern information 132 after the processing of S26 is performed.

The line pattern information 132 illustrated in FIG. 14 and the like includes, as items, "identification information" in which identification information for identifying each piece of information is set, and "line pattern" in which information indicating a line pattern added in the processing of S26 and the like is set.

Specifically, for example, in a case where the surface pattern S1 is specified in the processing of S22, the information generation unit 113 sets "1" as the "identification information" and sets "S1" as the "line pattern", as indicated in information in a first line in the line pattern information 132 indicated in FIG. 14.

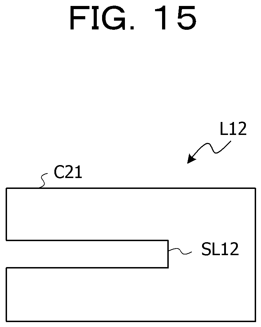

In other words, the information in the first line in the line pattern information 132 indicated in FIG. 14 indicates that a line C21 along the edges of the surface pattern S1 is arranged on the layer L12, as illustrated in FIG. 15.

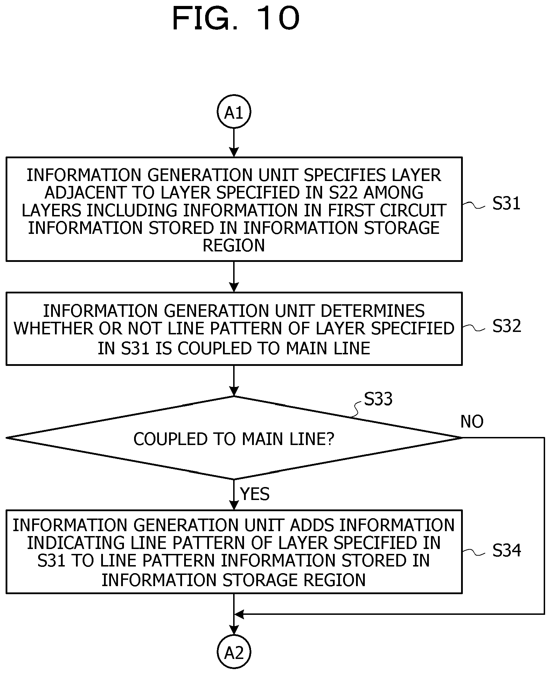

Subsequently, as illustrated in FIG. 10, the information generation unit 113 specifies a layer adjacent to the layer specified in the processing of S22 among the layers including the information in the circuit information 131 stored in the information storage region 130 (S31).

Specifically, the circuit information 131 described with reference to FIG. 12A, FIG. 12B, and FIG. 12C indicates that each of the layers L11 and L13 is adjacent to the layer L12. Thus, for example, in a case where the layer specified in the processing of S22 is the layer L12, the information generation unit 113 specifies the layers L11 and L13 as the layers adjacent to the layer specified in the processing of S22.

Then, the information generation unit 113 determines whether or not a line pattern of the layer specified in the processing of S31 is coupled to the main line (S32).

Specifically, in the example illustrated in FIG. 13A, FIG. 13B, and FIG. 13C, the line C13, the line C31, and the line C11 correspond to the main line (lines coupled to the main line). On the other hand, in the example illustrated in FIG. 13A, FIG. 13B, and FIG. 13C, each of the line C13, the line C31, and the line C11 is not coupled to the line C12. Thus, the information generation unit 113 determines that the line C12 is not coupled to the main line.

Subsequently, in a case where it is determined that the line pattern of the layer specified in the processing of S31 is coupled to the main line (YES in S33), the information generation unit 113 adds information indicating the line pattern of the layer specified in the processing of S31 to the line pattern information 132 stored in the information storage region 130 (S34).

On the other hand, in a case where it is determined that the line pattern of the layer specified in the processing of S31 is not coupled to the main line (NO in S33), the information generation unit 113 does not perform the processing of S34.

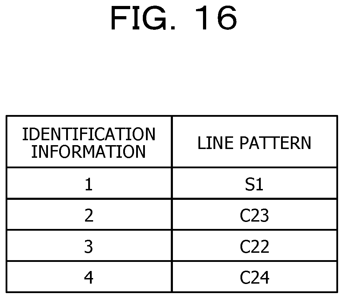

Specifically, in a case where lines of the layer specified in the processing of S31 are the line C13, the line C31, and the line C11, for example, the information generation unit 113 sets "2" as the "identification information" and sets "C23" indicating a line C23 along the line C13 as the "line pattern", as indicated in information in a second line in the line pattern information 132 indicated in FIG. 16. Furthermore, in this case, the information generation unit 113 sets "3" as the "identification information" and sets "C22" indicating a line C22 along the line C11 as the "line pattern", as indicated in information in a third line in the line pattern information 132 indicated in FIG. 16. Moreover, in this case, the information generation unit 113 sets "4" as the "identification information" and sets "C24" indicating a line C24 along the line C31 as the "line pattern", as indicated in information in a fourth line in the line pattern information 132 indicated in FIG. 16.

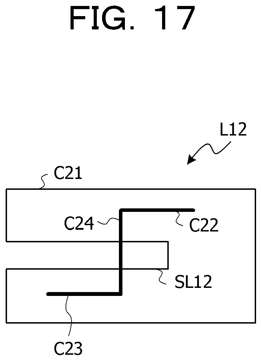

In other words, the information in the second to fourth lines in the line pattern information 132 indicated in FIG. 16 indicates that the lines C23 and C22 along the lines C13 and C11, respectively, in the layer L11 and the line C24 along the line C31 in the layer L13 are arranged in the layer L12, as illustrated in FIG. 17.

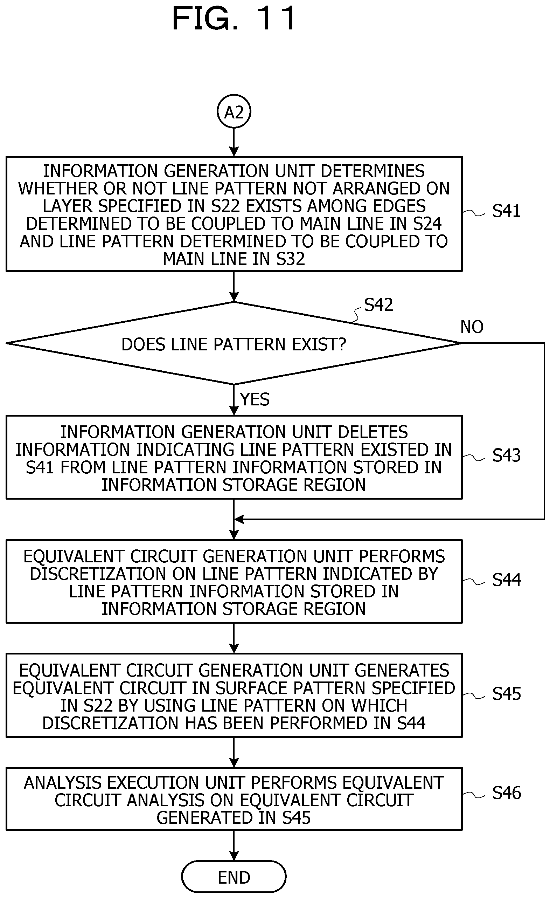

Subsequently, as illustrated in FIG. 11, the information generation unit 113 determines whether or not a line pattern not arranged on the layer specified in the processing of S22 exists among the edges determined to be coupled to the main line in the processing of S24 and the line pattern determined to be coupled to the main line in the processing of S32 (S41).

As a result, in a case where it is determined that the line pattern not arranged on the layer specified in the processing of S22 exists (YES in S42), the information generation unit 113 deletes information indicating the line pattern determined to exist in the processing of S41 from the line pattern information 132 stored in the information storage region 130 (S43).

On the other hand, in a case where it is determined that the line pattern not arranged on the layer specified in the processing of S22 does not exist (NO in S42), the information generation unit 113 does not perform the processing of S43.

Specifically, in the example illustrated in FIG. 17, the slit SL12 exists in the layer L12. Additionally, in the example illustrated in FIG. 17, an intermediate portion of the line C24 is arranged over the slit SL12. Thus, the information generation unit 113 deletes information corresponding to the intermediate portion of the line C24 from the line pattern information 132.

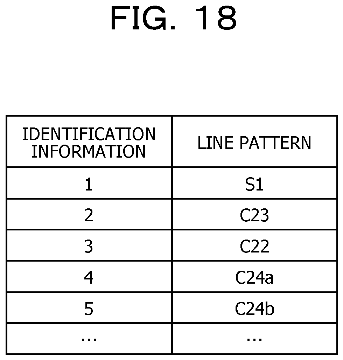

More specifically, in this case, the information generation unit 113 deletes, for example, the information whose "identification information" is "4" in the line pattern information 132 described with reference to FIG. 16. Then, the information generation unit 113 sets "4" as the "identification information" and sets "C24a" as the "line pattern", as indicated in information in a fourth line in the line pattern information 132 indicated in FIG. 18. Furthermore, the information generation unit 113 sets "5" as the "identification information" and sets "C24b" as the "line pattern", as indicated in information in a fifth line in the line pattern information 132 indicated in FIG. 18.

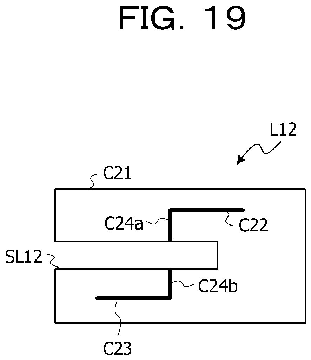

In other words, the information in the fourth and fifth lines in the line pattern information 132 indicated in FIG. 18 indicates that the intermediate portion of the line C24 (portion other than a line C24a and a line C24b) described with reference to FIG. 17 is not arranged in the layer L12, as illustrated in FIG. 19.

Returning to FIG. 11, the equivalent circuit generation unit 114 of the information processing device 1 performs discretization on the line pattern indicated by the line pattern information 132 stored in the information storage region 130 (S44).

In other words, the equivalent circuit generation unit 114 performs discretization for the surface pattern specified in the processing of S22 by using the line pattern information 132 obtained by changing information regarding the surface pattern specified in the processing of S22 to information regarding the line pattern.

Then, the equivalent circuit generation unit 114 generates an equivalent circuit in the surface pattern specified in the processing of S22 by using the line pattern on which the discretization has been performed in the processing of S44 (S45). Furthermore, in this case, the equivalent circuit generation unit 114 also generates an equivalent circuit of another circuit included in the electronic circuit board to be analyzed.

Thereafter, the analysis execution unit 115 of the information processing device 1 performs an equivalent circuit analysis on the equivalent circuit generated in the processing of S45 (S46).

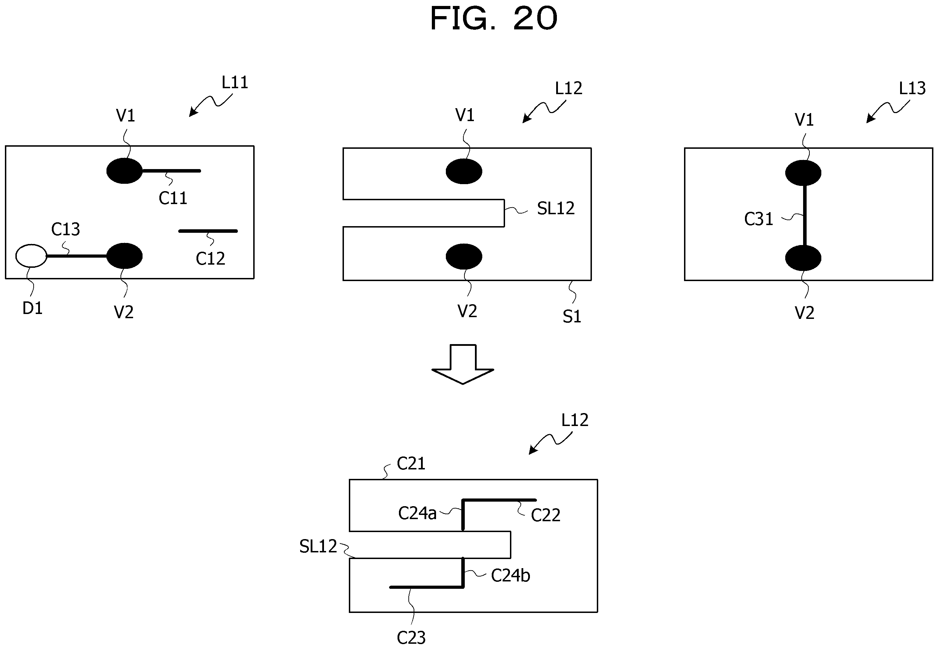

As described above, the information processing device 1 in the present embodiment refers to the circuit information 131 regarding a circuit included in an electronic circuit board to be analyzed to specify a surface pattern included in the electronic circuit board to be analyzed. Then, as illustrated in FIG. 20, the information processing device 1 generates the line pattern information 132 in which information regarding the specified surface pattern is changed to information regarding a line pattern among information included in the circuit information 131, based on a line in a layer adjacent to the surface pattern (for example, upper and lower layers of the surface pattern). Thereafter, the information processing device 1 executes an equivalent circuit analysis based on the generated line pattern information 132.

In other words, it may be determined that the surface pattern has a limited number of portions where a strong current is generated. Thus, the information processing device 1 in the present embodiment performs discretization only on a portion where it may be determined that a strong current is generated, instead of discretization on the entire surface pattern.

With this configuration, the information processing device 1 in the present embodiment may suppress an amount of calculation associated with equivalent circuit formation for the surface pattern. Thus, the information processing device 1 may suppress an amount of calculation needed to perform the equivalent circuit analysis for the surface pattern.

Specifically, the information processing device 1 in the present embodiment may reduce a degree of freedom of the equivalent circuit analysis from O(n²) to O(n).

Furthermore, for example, while an amount of calculation needed to perform an equivalent circuit analysis using a linear solver based on LU decomposition is O(n⁶), the information processing device 1 in the present embodiment may reduce the amount of calculation needed for the equivalent circuit analysis to O(n³).

Moreover, in recent years, when EMI emitted when a current flows through an electronic circuit board is measured, a machine learning model generated using an analysis result by an FDTD method as a correct answer label may be used. Thus, the information processing device 1 in the present embodiment may generate training data used to generate the machine learning model described above by, for example, using a current distribution of a circuit specified in the equivalent circuit analysis in the present embodiment as a feature.

### REFERENCE SIGNS LIST

- 1: Information processing device
- 2: Operation terminal
- 10: Information processing system
- NW: Network

## Claims

1. An equivalent circuit analysis program that causes a computer to execute a process, the process comprising:
specifying a surface pattern included in first circuit information;
generating second circuit information in which the surface pattern is changed to a line pattern based on a wire of a layer adjacent to the surface pattern; and
executing an equivalent circuit analysis based on the second circuit information.

2. The equivalent circuit analysis program according to claim 1, wherein
in the processing of generating,
an edge in the surface pattern included in the first circuit information is specified, and
the second circuit information that includes information that indicates that a first line pattern that corresponds to the edge is arranged on a layer of the surface pattern, and a second line pattern is arranged at a position that faces the wire on the layer of the surface pattern is generated.

3. The equivalent circuit analysis program according to claim 2, wherein
in the processing of generating,
whether or not a main line coupled to a power supply is coupled to the first line pattern is determined, and
in a case where it is determined that the main line is coupled to the first line pattern, the second circuit information that includes information that indicates that the first line pattern is arranged on the layer of the surface pattern is generated.

4. The equivalent circuit analysis program according to claim 2, wherein
in the processing of generating,
whether or not a main line coupled to a power supply is coupled to the second line pattern is determined, and
in a case where it is determined that the main line is coupled to the second line pattern, the second circuit information that includes information that indicates that the second line pattern is arranged on the layer of the surface pattern is generated.

5. The equivalent circuit analysis program according to claim 2, wherein
in the processing of generating,
whether or not a third line pattern not arranged on the layer of the surface pattern is included in the second line pattern is determined, and
in a case where it is determined that the third line pattern is included in the second line pattern, the second circuit information that does not include information that indicates that the third line pattern is arranged on the layer of the surface pattern is generated.

6. An equivalent circuit analysis apparatus comprising:
a storage unit that stores first circuit information; and
a control unit that executes processing of specifying a surface pattern included in the first circuit information, generating second circuit information in which the surface pattern is changed to a line pattern based on a wire of a layer adjacent to the surface pattern, and executing an equivalent circuit analysis based on the second circuit information.

7. The equivalent circuit analysis apparatus according to claim 6, wherein
the control unit is further configured to
specify an edge in the surface pattern included in the first circuit information, and
generate the second circuit information that includes information that indicates that a first line pattern that corresponds to the edge is arranged on a layer of the surface pattern, and a second line pattern is arranged at a position that faces the wire on the layer of the surface pattern.

8. An equivalent circuit analysis method for a computer to execute a process comprising:
specifying a surface pattern included in first circuit information;
generating second circuit information in which the surface pattern is changed to a line pattern based on a wire of a layer adjacent to the surface pattern; and
executing an equivalent circuit analysis based on the second circuit information.

9. The equivalent circuit analysis method according to claim 8, wherein
in the processing of generating,
an edge in the surface pattern included in the first circuit information is specified, and
the second circuit information that includes information that indicates that a first line pattern that corresponds to the edge is arranged on a layer of the surface pattern, and a second line pattern is arranged at a position that faces the wire on the layer of the surface pattern is generated.
